# EUROPEAN PATENT SPECIFICATION

(11) **EP 3 774 257 B1**
(45) Date of publication and mention of the grant of the patent: **26.10.2022**
(21) Application number: 19705829.0
(22) Date of filing: 07.02.2019
(51) Int. Cl.: B29D 30/00, B29C 35/16, B29D 30/06

(54) **POST CURE INFLATOR FOR TIRES AND CORRESPONDING METHOD AFTER VULCANISATION**
AUFBLASGERÄT NACH DEM VULKANISIEREN UND ENTSPRECHENDES VERFAHREN ZUM AUFBLASEN VON REIFEN
GONFLEUR POST VULCANISATION ET PROCEDE DE GONFLAGE DE PNEUS APRES LA VULCANISATION

(43) Date of publication of application: 17.02.2021
(73) Proprietor: L&T Rubber Processing Machinery, Kanchipuram, Tamil Nadu 631561 (IN)
(72) Inventor: ANANTH, Ranganathan, Coimbatore 641045 (IN); ARUNACHALAM, Muthu, Coimbatore 641045 (IN); ABHIJITH, Souparnika, Coimbatore 641045 (IN); KARUPPUSAMY, Ganesh, Raja, Chennai 600118 (IN); ARAVAMUDHUN, Govindarajan, Chennai 600092 (IN)
(74) Representative: Swea IP Law AB
(86) International application number: PCT/IN2019/050098
(87) International publication number: WO 2020/161726

(56) References cited:
- CN-A- 104 386 039
- CN-A- 108 312 588
- US-A- 5 741 528

## Description

### TECHNICAL FIELD OF THE INVENTION

The present subject matter described herein, in general, relates to machinery for manufacturing tires for motor vehicles of nearly all sizes. More particularly, the present invention relates to post-treatment of tires after curing and the mechanism involved in loading and unloading of tires in/out of the post treatment apparatus.

### BACKGROUND OF THE INVENTION

In general, the automobile tires are expected to have a high degree of strength and resilience to serve the varying dynamics in the road. The tires exiting from the tire vulcanizing/curing presses are less stable in its shape and are considered to be very soft and fragile. Thus, there arises a demanding requirement for a post treatment of these tires under predetermined conditions similar to automobile rim mounting and inflation.

Current arrangement of post cure inflators (PCI) is described in patents applications US 5352104A, US 2011/0189324A1, US 8366426B2, US 8337187B2, EP 0143538A2, US 7740464B2, CN 102328368B, CN 201410718Y, CN 101544035A, US 20090175975 A1. In all these patent documents, various functional arrangements of components to treat the tire are disclosed. The major advantage being is that the ways and means stands unique while each one falls short with its mechanisms becoming complex, requiring multiple tire centering arrangements if not done might lead to a defective tire. Further, in few cases malfunctioning on centering may also cause tire curing press to stop and further use of multiple loading and unloading devices for loading and unloading the tires on and off the tire curing press and PCI increases the interface setup time with multiple device placement and affects accuracy. Adding to this, an integrated approach of tire curing press unloading device performing the Loading and Unloading of PCI as described in one of the above patents demands a huge space in the machine footprint there by affecting the layout utilization and creating an unfriendly zone during the time of service and maintenance. The multiple function devices also utilize precise machining which increases the cost of the device and the complexity with it. One another approach of providing a ladder frame construction of cooling station with plurality of hydraulic cylinders for clamping the rim beads poses a big threat by allowing the oil to stay in close vicinity to the cooling tire, any leak/spillage of oil from cylinder may lead to scrapping of tires. Other approaches as described in Chinese patents deals with 2-position, turnover and elevator type of cooling devices comprising various means of loading/unloading, locking means and tilting and indexing means to perform the cooling operation, though stands reliable and compact, the mechanisms and processes involved dips down its merits in terms of their Loading/positioning/Unloading sequences, setup time and the complexity integrated with it adds more cost to it.

Thus, the above patent documents include the following drawbacks:
- Hydraulic cylinder is prone to leakage and the leakage oil can lead to tire scrap.
- The tire handling device having multiple stopping positions thereby increasing its complexity.
- The width and height of the Post cure inflator is higher to allow the tire handling device inside the apparatus to load/unload the tires.
- In case of hydraulic leakage inside/outside the cylinder, the rim-to-rim distance will increase.
- PCI occupying more width in floor layout.
- Single frame/bayonet rim locking in PCI requires complex machining in rim mounting surfaces.

Further, for some other prior art tire vulcanizing system, reference is made to EP1642695B1, which provides a tire vulcanizing system characterized in comprising a vulcanizer for vulcanizing a green tire, a post cure inflator, and a transfer device. The transfer device is configured to receive a vulcanized tire from the vulcanizer and transfer the vulcanized tire to the post cure inflator to be thereby delivered to a rim of the post cure inflator. Further, the transfer device is provided with a means for rotatably holding the vulcanized tire, and is capable of placing the vulcanized tire on a predetermined rotation position on the rim.

In the above mentioned patent EP '695B1, the complex arrangement is having 4 positions, rotatable PCI with loading device integrated with the tire vulcanizer, which unloads the cured tire from vulcanizer and loads it on the lower rim of PCI. One another rotatable device is holding the upper rim of the PCI, rotates and engages with the placed tire on the lower rim of PCI. The loading device integrated with tire vulcanizer performs the loading of cured tire to PCI and then unloading it from PCI to Conveyor.

Reference is also made to CA 1104776 A, which discloses a curing system including a curing press-post inflator combination wherein the tire moves through the curing and post inflation process under complete control at all times. The post inflator is mounted on the press frame and is aligned with the top mold section of the press in the full open position of the press. The upper or outside bead rim of the post inflator is removed by a mechanism operating, in part, independently of the press top mold section so that the post inflator can be closed and operational prior to the full closing of the press. A chuck in the top mold section not only holds the tire for stripping from the mold sections and bladder but retains control over the tire vertically to place the tire without dropping or any lateral movement on the aligned open bottom or inner bead rim of the post cure inflator.

In the above patent application CA '776A, a complex structure of flip over, trunnion mounted top and bottom station PCI is described, wherein the loading of tire to the lower rim on its upper station is done directly by movement of top mold (with tire held by a stripping chuck) on to the top station of PCI. After placing, the mold reverts to its initial position. Then a separate rotating device holding the upper PCI rim rotates and engages with the tire placed on the top station of PCI. Locking happens between the top and lower rims of top station of PCI. Then PCI flips over for receiving next tire from the mold. The unloading of tire in the bottom station happens by unlocking the lower bead rim and is retracted beneath a tilt conveyor wherein the tire is extracted from the lower bead rim. Further, it involves direct placement of tire from mould to PCI.

CN104386039A discloses another example of a jacking type tire inflation machine, which comprises a base, wherein the two sides of the base are respectively provided with a support seat, the top part of each support seat is provided with a connecting seat, a tire support disc is arranged on the base, a lifting driving mechanism is arranged on the connecting seats, the bottom end of the lifting driving mechanism is connected with an inflation ring, the inflation ring corresponds to the tire support disc, and comprises an inflation outer ring and an inflation inner ring, and the inflation inner ring is arranged in the inflation outer ring.

Accordingly, in view of the hither complex mechanism, there exists a dire need to provide a simple and reliable tire holding mechanism for post cure inflator with less number of components.

### SUMMARY OF THE INVENTION

The following presents a simplified summary of the invention in order to provide a basic understanding of some aspects of the invention. This summary is not an extensive overview of the present invention. It is not intended to identify the key/critical elements of the invention or to delineate the scope of the invention. Its sole purpose is to present some concept of the invention in a simplified form as a prelude to a more detailed description of the invention presented later.

An object of the present invention is to provide an apparatus and method of tire holding mechanism which is simple, self-locking and eliminates conventional complex locking/unlocking and tire centering mechanisms.

Another object of the present invention is to provide a post-cure inflator apparatus with having at least one individual arm with simple arrangement for rim holding.

Accordingly, in one aspect, the present invention provides an apparatus for post cure inflation-treatment of a tire, as defined in claim 1.
In another aspect, the present invention provides a method for post cure inflation-treatment of a tire, as defined in claim 7.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE ACCOMPANYING DRAWINGS

The above and other aspects, features, and advantages of certain exemplary embodiments of the present invention will be more apparent from the following description taken in conjunction with the accompanying drawings in which:
Figure 1 illustrates an isometric view of post cure inflator, in accordance with an embodiment of the present invention.
Figure 2 illustrates an isometric view of post curing inflator apparatus having an IN and OUT position, in accordance with an embodiment of the present invention.
Figure 3 illustrates a plan view of post cure inflator with hydraulic tire curing press, in accordance with the embodiment of the present invention
Figure 4 illustrates the side view of total machine layout with post cure inflator, in accordance with the embodiment of the present invention.

Persons skilled in the art will appreciate that elements in the figures are illustrated for simplicity and clarity and may have not been drawn to scale. For example, the dimensions of some of the elements in the figure may be exaggerated relative to other elements to help to improve understanding of various exemplary embodiments of the present disclosure. Throughout the drawings, it should be noted that like reference numbers are used to depict the same or similar elements, features, and structures.

### DETAILED DESCRIPTION OF THE PRESENT INVENTION

The following description with reference to the accompanying drawings is provided to assist in a comprehensive understanding of exemplary embodiments of the invention. It includes various specific details to assist in that understanding but these are to be regarded as merely exemplary.

Descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

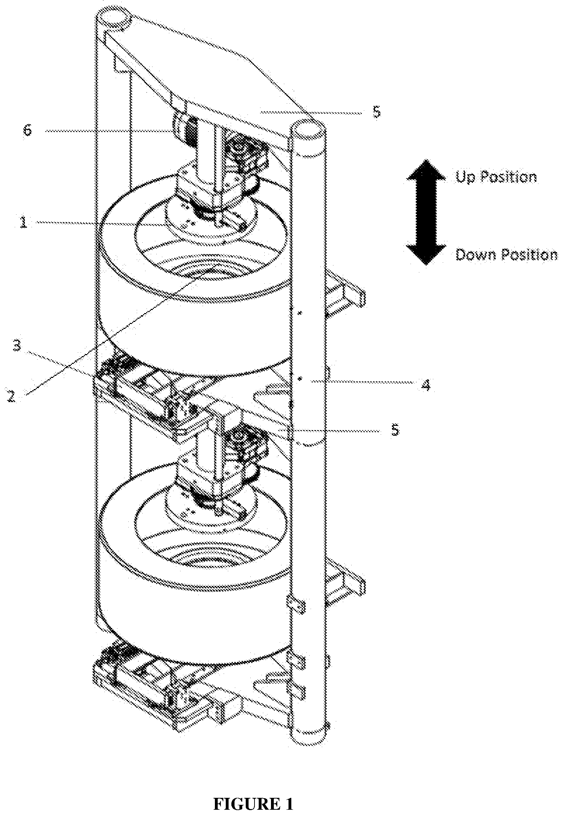

The full overview of the arrangement of the apparatus for post-treatment of cured tires with a curing press provided in figures 1-4 and are as follows:
1. Top rim plate
2. Bottom rim plate
3. Arm
4. Vertical column
5. Modular frame
6. Drive unit with position sensing device
7. Actuating drive
8. Tire Curing Press
9. Press Loader
10. Press Unloader
11. Post Cure Inflator apparatus (PCI)

In one implementation, the Figure 1 illustrates the overview of isometric view of PCI apparatus (11) in IN position having up and down position of the top rim plate (1).

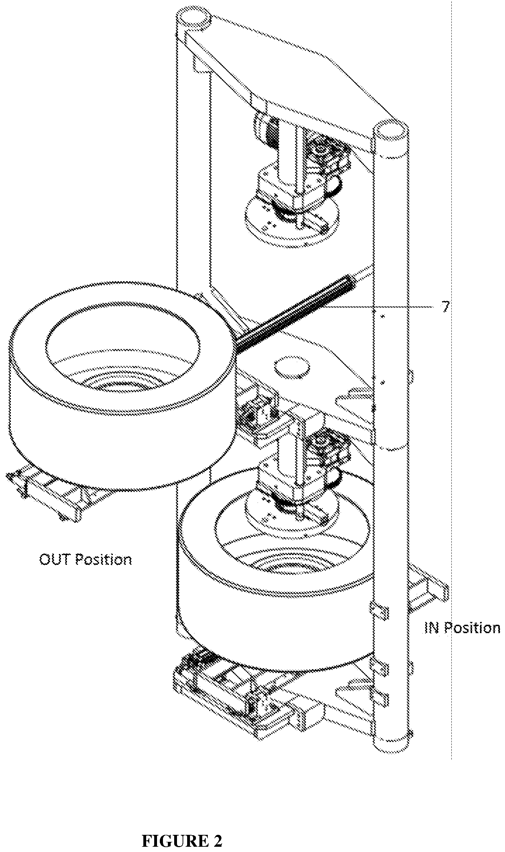

In one implementation, the Figure 2 illustrates isometric view of PCI apparatus in OUT position with an actuating drive (7).

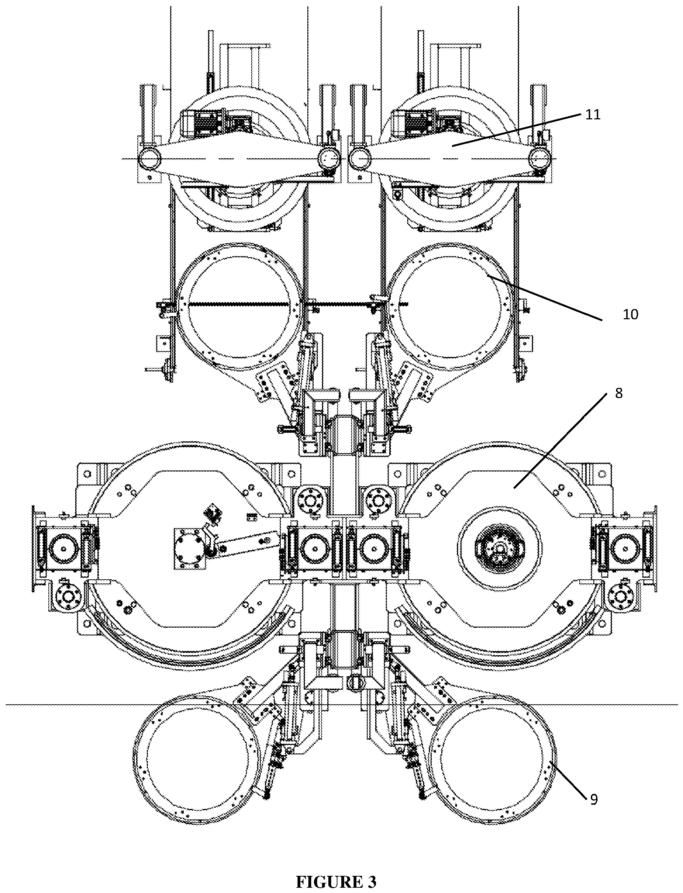

In another implementation, the Figure 3 illustrates the major components used during the method for operating the apparatus (11) for post-treatment a tire along with the tire curing press (8). The major components include the apparatus (11), the press unloader (10), the tire curing press (8), and the press loader (9).

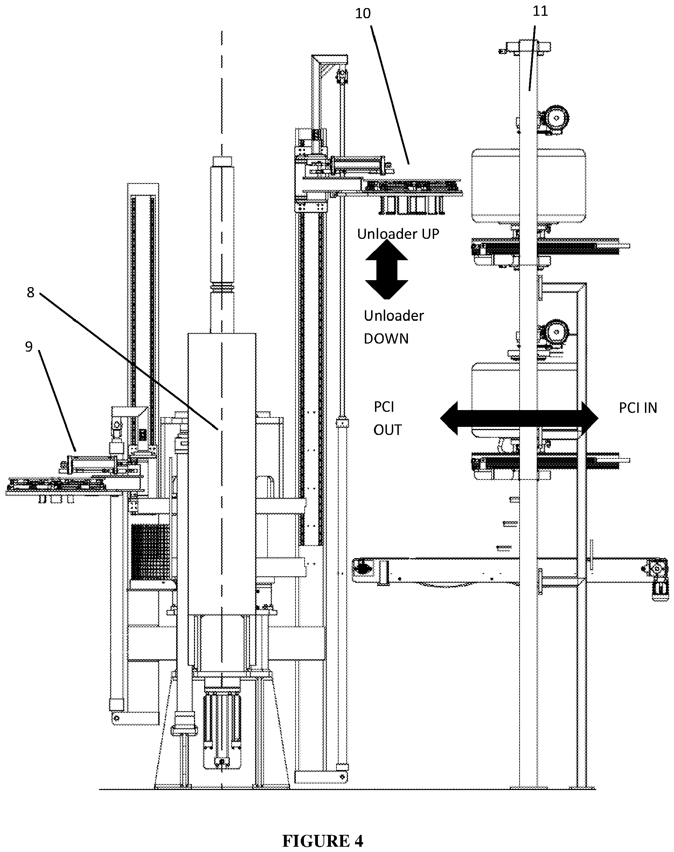

In another implementation, the Figure 4 illustrates the up and down movement of the unloader (10), and the IN/OUT movement of the arm (3).

As illustrated in Figure 1, the PCI apparatus (11) comprises a top rim plate (1), a bottom rim plate (2), at least one arm (3), a plurality of vertical columns (4), a plurality of modular frames (5), and at least one drive unit (6).

The plurality of modular frame (5) and the plurality of vertical columns (4) are configured to act as structures for mounting the top rim plate (1), the bottom rim plate (2), the at least one arm (3), and at least one drive unit (6).

The top rim plate (1) is configured to be mounted on the modular frame (5). The top rim plate (1) is also coupled to at least one drive unit (6) and is configured to move vertically in one of up and down position. The up position may correspond to a farthest position of the top rim plate (1) from the bottom rim plate (2), whereas, the down position may correspond to a nearest position of the top rim plate (1) from the bottom rim plate (2) for maintaining a pre-defined rim to rim distance. Further, the top rim plate (1) may be vertically moved by means of screw and nut means actuated by the at least one drive unit (6). The top rim plate (1) may be moved from the up position to the down position to maintain the predefined rim-to-rim distance. The top rim plate (1) may also be moved from the up position to the down position for applying an inflation pressure. The top rim plate (1) may be moved from the down position to the up position for relieving the inflation pressure.

Further, the at least one drive unit (6) is configured to control the vertical up and down movement of the top rim plate (1). The at least one drive unit (6) comprises at least one sensing device for controlling the movement of the top rim plate (1). The at least one drive unit (6) includes, but not limited to, an electric drive unit, a hydraulic drive unit, a pneumatic drive unit, and a hybrid drive unit.

Further, bottom rim plate (2) is mounted on at least one arm (3), which in turn is guided on the modular frame (5). The bottom rim plate (2) is spring loaded to maintain a clearance with the modular frame (5). The bottom rim plate (2) along with the at least one arm (3) is actuated linearly by at least one actuating drive (7).

Further, the at least one arm (3) is configured to move linearly with the bottom rim plate (2) in one of IN position and OUT position. In an event, the at least one arm (3) with the bottom rim plate (2) is in IN position, the at least one arm (3) with the bottom rim plate (2) is concentric with the top rim plate (1). In an event, the at least one arm (3) is in OUT position, the at least one arm (3) with the bottom rim plate (2) is in line with the press unloader (10) of the tire curing press (8) (refer Figure 3-4). Furthermore, the at least one arm (3) is configured to one of load and unload the tire in OUT position, whereas the at least one arm (3) is configured to hold the tire in IN position.

The linear movement of the at least one arm (3) is resultant of the linear movement of the at least one actuating drive (7). The at least one actuating drive (7) may be coupled to the bottom rim plate (2) and mounted on the modular frame (5).

The at least one actuating drive (7) may include, but not limited to, an electric actuating drive, a hydraulic actuating drive, a pneumatic actuating drive, and a hybrid actuating drive. The at least one actuating drive (7) may be a telescopic or non-telescopic in nature. In an embodiment, the at least one actuating drive (7) is a pneumatic push rod.

Further, a method for operating the apparatus (11) for post-treatment the tire may start with a movement of the at least one arm (3) to the OUT position from the IN position (as shown figure 2). Further, the post cured or the cooled tire is unloaded from the at least one arm (3) with the bottom rim plate (2), and a new tire is loaded on the bottom rim plate (2) from the press unloader (10) (as shown in Figure 3-4). Subsequently, the at least one arm (3) is moved back to the IN position such that the top rim plate (1) and the bottom rim plate (2) are concentric to each other. Further, the top rim plate (1) is moved vertically from the up position to the down position to maintain the pre-defined rim-to-rim distance and to apply the inflation pressure. In an embodiment, various curing operations may be performed on the tire at the down position. In an embodiment, the tire may be cooled at a pre-defined cooling cycle for pre-defined time at the down position. Subsequently, the top rim plate (1) is moved vertically from the down position to the up position so as to relieve the inflation pressure. Finally, the at least one arm (3) is moved back to the OUT position for unloading the treated tire.

Some of the non-limiting benefits of the present invention over the prior art are as below:
- Lead screw is used to maintain rim-to-rim distance, thus, avoiding cylinder failure, Oil leakage and tire scrapping.
- Simpler mechanism for improved reliability.
- Multiple stopping positions of tire handling device are avoided, and size of PCI frame reduced by using simpler arm for the apparatus.
- The modular frame avoids complex machining to achieve concentricity between rims.
- In the present invention, there is a no direct placement of tire from tire curing press to PCI. The loading happens by a press unloader or PCI loading device.
- In the present invention, the receiving station of PCI is movable with a linear arm attached with PCI. Similar stations can be stacked to handle one or more tires without increasing the floor space unlike tires spaced on a rotary table.

It may be understood by the person skilled in that art that, the coupling, joining, fitting, fastening, of the two components mentioned the present invention may be achieved by any of the existing coupling techniques that may include but not limited to fasteners, nuts and screws or any other mechanical linkage.

Although an apparatus and method for post-treatment of tires have been described in language specific to structural features, it is to be understood that the embodiments disclosed in the above section are not necessarily limited to the specific features or methods or devices described. Rather, the specific features are disclosed as examples of implementations of an apparatus and method for post-treatment of tires. The invention is only limited to the scope of the appended claims.

## Claims

1. An apparatus (11) for post cure inflation-treatment of a tire, the apparatus comprising:
a plurality of vertical columns (4);
a modular frame (5);
a top rim plate (1), coupled to at least one drive unit (6), configured to move vertically in one of up and down position; and
at least one arm (3), actuated by at least one arm actuating drive (7), wherein the modular frame (5) and the plurality of vertical columns (4) are configured to act as structures for mounting the top rim plate (1),
a bottom rim plate (2) mounted on said at least one arm (3), which in turn is guided on the modular frame (5), wherein said at least one arm (3) is configured to linearly move with the bottom rim plate (2) in one of an IN position and an OUT position to load and unload the tire, and during the IN position, the at least one arm (3) with the bottom rim plate (2) is concentric with the top rim plate (1), ***characterized in that*** the bottom rim plate (2) is spring loaded to maintain a clearance with the modular frame (5);
the at least one drive unit (6) comprises at least one sensing device for controlling the movement of the top rim plate (1); and
the top rim plate (1) is adapted to move vertically by means of screw and nut means actuated by the at least one drive unit (6).

2. The apparatus as claimed in claim 1, wherein the up position corresponds to a farthest position of the top rim plate (1) from the bottom rim plate (2).

3. The apparatus as claimed in claim 1, wherein the down position corresponds to a nearest position of the top rim plate (1) from the bottom rim plate (2) for maintaining a pre-defined rim-to-rim distance.

4. The apparatus as claimed in claim 1, wherein the at least one drive unit (6) is one of an electric drive unit, a hydraulic drive unit, a pneumatic drive unit, and a hybrid drive unit.

5. The apparatus as claimed in claim 1, wherein the at least one arm actuating drive (7) is one of an electric actuating drive, a hydraulic actuating drive, a pneumatic actuating drive, and a hybrid actuating drive.

6. The apparatus as claimed in claim 1, wherein the at least one arm is a telescopic linear arm.

7. A method for post cure inflation-treatment of a tire using the apparatus (11) as claimed in claim 1 and a tire curing press (8) having an unloading device (10);
the method comprising:
moving, by means of at least one arm actuating drive (7), the at least one arm (3) linearly to an OUT position for loading or unloading of the tire, wherein during the OUT position the at least one arm (3) with the bottom rim plate (2) is in line with the unloading device (10) of the tire curing press (8);
moving, by means of the at least one arm actuating drive (7), the at least one arm (3) linearly from the OUT position to an IN position, wherein during the IN position, the at least one arm (3) with bottom rim plate (2) is concentric with the top rim plate (1);
moving, by means of at least one drive unit (7), the top rim plate (1) from an up position to a down position to maintain a predefined rim-to-rim distance and apply an inflation pressure on the tire; and
moving, by means of the at least one drive unit (7), the top rim plate (1) from the down position to the up position to relieve the inflation pressure.

8. The method as claimed in claim 7, wherein the up position corresponds to a farthest position of the top rim plate (1) from the bottom rim plate (2).

9. The method as claimed in claim 7, wherein the down position corresponds to a nearest position of the top rim plate (1) from the bottom rim plate (2) for maintaining a pre-defined rim-to-rim distance.

## Patentansprüche

1. Einrichtung (11) zur Behandlung durch Aufblasen nach Aushärten eines Reifens, wobei die Einrichtung umfasst: eine Vielzahl vertikaler Säulen (4);
einen modularen Rahmen (5);
eine obere Felgenplatte (1), die mit mindestens einer Antriebseinheit (6) gekoppelt ist, die dazu konfiguriert ist, sich vertikal in einer der Auf- und Ab-Positionen zu bewegen; und
mindestens einen Arm (3), der durch mindestens einen Armbetätigungsantrieb (7) betätigt wird, wobei der modulare Rahmen (5) und die Vielzahl von vertikalen Säulen (4) dazu konfiguriert sind, als Strukturen zum Montieren der oberen Felgenplatte (1) zu wirken,
eine untere Felgenplatte (2), die an dem mindestens einen Arm (3) montiert ist, der wiederum an dem modularen Rahmen (5) geführt ist, wobei der mindestens eine Arm (3) dazu konfiguriert ist, sich mit der unteren Felgenplatte (2) linear in eine von einer EIN-Position und einer AUS-Position zu bewegen, um den Reifen einzuladen und zu entladen, und in der EIN-Position der mindestens eine Arm (3) mit der unteren Felgenplatte (2) konzentrisch mit der oberen Felgenplatte (1) ist, **dadurch gekennzeichnet, dass**
die untere Felgenplatte (2) federbelastet ist, um ein Spiel mit dem modularen Rahmen (5) beizubehalten;
die mindestens eine Antriebseinheit (6) mindestens eine Erfassungsvorrichtung zum Steuern der Bewegung der oberen Felgenplatte (1) umfasst; und
die obere Felgenplatte (1) dazu ausgelegt ist, sich vertikal mittels Schraub- und Muttermittel zu bewegen, die durch die mindestens eine Antriebseinheit (6) betätigt werden.

2. Einrichtung nach Anspruch 1, wobei die Aufwärtsposition einer am weitesten entfernten Position der oberen Felgenplatte (1) von der unteren Felgenplatte (2) entspricht.

3. Einrichtung nach Anspruch 1, wobei die Abwärtsposition einer nächstgelegenen Position der oberen Felgenplatte (1) von der unteren Felgenplatte (2) entspricht, um einen vordefinierten Felge-zu-Felge-Abstand aufrechtzuerhalten.

4. Einrichtung nach Anspruch 1, wobei die mindestens eine Antriebseinheit (6) eine von einer elektrischen Antriebseinheit, einer hydraulischen Antriebseinheit, einer pneumatischen Antriebseinheit und einer Hybridantriebseinheit ist.

5. Einrichtung nach Anspruch 1, wobei der mindestens eine Armbetätigungsantrieb (7) eines von einem elektrischen Betätigungsantrieb, einem hydraulischen Betätigungsantrieb, einem pneumatischen Betätigungsantrieb und einem Hybridbetätigungsantrieb ist.

6. Einrichtung nach Anspruch 1, wobei der mindestens eine Arm ein linearer Teleskoparm ist.

7. Verfahren zur Behandlung durch Aufblasen nach Aushärten eines Reifens unter Verwendung der Einrichtung (11) nach Anspruch 1 und einer Reifenaushärtungspresse (8) mit einer Entladevorrichtung (10);
wobei das Verfahren umfasst:
Bewegen, mittels mindestens eines Armbetätigungsantriebs (7), des mindestens einen Arms (3) linear in eine AUS-Position zum Ein- oder Entladen des Reifens, wobei in der AUS-Position der mindestens eine Arm (3) mit der unteren Felgenplatte (2) sich in einer Linie mit der Entladevorrichtung (10) der Reifenaushärtungspresse (8) befindet;
Bewegen, mittels des mindestens einen Armbetätigungsantriebs (7), des mindestens einen Arms (3) linear von der AUS-Position in eine EIN-Position, wobei in der EIN-Position der mindestens eine Arm (3) mit der unteren Felgenplatte (2) konzentrisch mit der oberen Felgenplatte (1) ist;
Bewegen, mittels mindestens einer Antriebseinheit (7), der oberen Felgenplatte (1) von einer Aufwärtsposition in eine Abwärtsposition, um einen vordefinierten Felge-zu-Felge-Abstand aufrechtzuerhalten und den Reifen mit einem Aufblasdruck zu beaufschlagen; und
Bewegen, mittels der mindestens einen Antriebseinheit (7), der oberen Felgenplatte (1) von der Abwärtsposition in die Aufwärtsposition, um den Aufblasdruck zu entlasten.

8. Verfahren nach Anspruch 7, wobei die Aufwärtsposition einer weitesten Position der oberen Felgenplatte (1) von der unteren Felgenplatte (2) entspricht.

9. Verfahren nach Anspruch 7, wobei die Abwärtsposition einer nächsten Position der oberen Felgenplatte (1) von der unteren Felgenplatte (2) entspricht, um einen vordefinierten Felge-zu-Felge-Abstand aufrechtzuerhalten.

## Revendications

1. Appareil (11) de traitement de gonflage post-vulcanisation d'un pneu, l'appareil comprenant :
une pluralité de colonnes verticales (4) ;
un cadre modulaire (5) ;
une plaque de jante supérieure (1), couplée à au moins une unité d'entraînement (6), configurée pour se déplacer verticalement dans l'une parmi une position haute et une position basse ; et
au moins un bras (3), actionné par au moins un entraînement d'actionnement de bras (7), dans lequel le cadre modulaire (5) et la pluralité de colonnes verticales (4) sont configurés pour agir comme des structures pour monter la plaque de jante supérieure (1),
une plaque de jante inférieure (2) montée sur ledit au moins un bras (3), qui à son tour est guidée sur le cadre modulaire (5), dans lequel ledit au moins un bras (3) est configuré pour se déplacer linéairement avec la plaque de jante inférieure (2) dans l'une parmi une position IN et une position OUT pour charger et décharger le pneu, et pendant la position IN, l'au moins un bras (3) avec la plaque de jante inférieure (2) est concentrique avec la plaque de jante supérieure (1), ***caractérisé en ce que***
la plaque de jante inférieure (2) est chargée par ressort pour maintenir un dégagement avec le cadre modulaire (5) ;
l'au moins une unité d'entraînement (6) comprend au moins un dispositif de détection pour commander le déplacement de la plaque de jante supérieur (1) ; et
la plaque de jante supérieure (1) est adaptée pour se déplacer verticalement au moyen de moyens de vis et d'écrou actionnés par l'au moins une unité d'entraînement (6).

2. Appareil selon la revendication 1, dans lequel la position haute correspond à une position la plus éloignée de la plaque de jante supérieure (1) depuis la plaque de jante inférieure (2).

3. Appareil selon la revendication 1, dans lequel la position basse correspond à une position la plus proche de la plaque de jante supérieure (1) depuis la plaque de jante inférieure (2) pour maintenir une distance jante à jante prédéfinie.

4. Appareil selon la revendication 1, dans lequel l'au moins une unité d'entraînement (6) est l'une d'une unité d'entraînement électrique, d'une unité d'entraînement hydraulique, d'une unité d'entraînement pneumatique, et d'une unité d'entraînement hybride.

5. Appareil selon la revendication 1, dans lequel l'au moins un entraînement d'actionnement de bras (7) est l'un d'un entraînement d'actionnement électrique, d'un entraînement d'actionnement hydraulique, d'un entraînement d'actionnement pneumatique, et d'un entraînement d'actionnement hybride.

6. Appareil selon la revendication 1, dans lequel l'au moins un bras est un bras linéaire télescopique.

7. Procédé de traitement de gonflage post-vulcanisation d'un pneu utilisant l'appareil (11) selon la revendication 1 et une presse de vulcanisation de pneu (8) ayant un dispositif de déchargement (10) ;
le procédé comprenant :
le déplacement, au moyen d'au moins un entraînement d'actionnement de bras (7), de l'au moins un bras (3) de manière linéaire jusqu'à une position OUT pour le chargement ou le déchargement du pneu, dans lequel pendant la position OUT l'au moins un bras (3) avec la plaque de jante inférieure (2) est en ligne avec le dispositif de déchargement (10) de la presse de vulcanisation de pneu (8) ;
le déplacement, au moyen de l'au moins un entraînement d'actionnement de bras (7), de l'au moins un bras (3) de manière linéaire depuis la position OUT jusqu'à une position IN, dans lequel pendant la position IN l'au moins un bras (3) avec la plaque de jante inférieure (2) est concentrique avec la plaque de jante supérieure (1) ;
le déplacement, au moyen d'au moins une unité d'entraînement (7), de la plaque de jante supérieure (1) depuis une position haute jusqu'à une position basse pour maintenir une distance jante à jante prédéfinie et appliquer une pression de gonflage sur le pneu ; et
le déplacement, au moyen de l'au moins une unité d'entraînement (7), de la plaque de jante supérieure (1) depuis la position basse jusqu'à la position haute pour soulager la pression de gonflage.

8. Procédé selon la revendication 7, dans lequel la position haute correspond à une position la plus éloignée de la plaque de jante supérieure (1) depuis la plaque de jante inférieure (2).

9. Procédé selon la revendication 7, dans lequel la position basse correspond à une position la plus proche de la plaque de jante supérieure (1) depuis la plaque de jante inférieure (2) pour maintenir une distance jante à jante prédéfinie.
